# EUROPEAN PATENT SPECIFICATION

(11) **EP 3 395 543 B1**
(45) Date of publication and mention of the grant of the patent: **19.02.2020**
(21) Application number: 17187009.0
(22) Date of filing: 21.08.2017
(51) Int. Cl.: B29C 64/20, B29C 64/245, B29C 64/112

(54) **THREE DIMENSIONAL PRINTING APPARATUS**
VORRICHTUNG ZUM DREIDIMENSIONALEN DRUCKEN
IMPRIMANTE EN TROIS DIMENSIONS

(30) Priority: 26.04.2017 TW 106113874
(43) Date of publication of application: 31.10.2018
(73) Proprietor: XYZprinting, Inc., New Taipei City 22201 (TW); Kinpo Electronics, Inc., New Taipei City 22201 (TW)
(72) Inventor: LEE, Yang-Teh, New Tapei City 22201 (TW); JUANG, Jia-Yi, New Tapei City 22201 (TW); HUANG, Chun-Hsiang, New Tapei City 22201 (TW); HO, Ming-En, New Taipei City 22201 (TW); HSIEH, Yi-Chu, New Taipei City 22201 (TW); CHU, Ting-Chun, New Tapei City 22201 (TW)
(74) Representative: 2K Patentanwälte Blasberg Kewitz & Reichel

(56) References cited:
- EP-A2- 0 227 344
- WO-A1-2016/050321
- US-A1- 2012 127 229
- US-A1- 2015 360 477

## Description

### TECHNICAL FIELD

The disclosure relates to a three-dimensional printing apparatus.

### BACKGROUND

Through the development of science and technology, various methods of constructing a physical three-dimensional (3-D) model by adopting the additive manufacturing technology, such as a layer-by-layer structuring model, have been proposed. In general, the additive manufacturing technology transforms design information of the 3D model constructed by software such as computer-aided design (CAD) software into a plurality of thin (quasi-two-dimensional) cross-sectional layers that are stacked continuously. Meanwhile, many technical means capable of forming a plurality of thin cross-section layers are gradually provided.

Comparing the conventional two-dimensional printing with the three-dimensional printing, in addition to the different materials used, the conventional two-dimensional printing differs in requiring a specific medium as carrier for a two-dimensional pattern to be printed thereon. However, there is no significant difference when it comes to how the printing nozzle is driven. In other words, the difference between two-dimensional printing and three-dimensional printing only lies in whether the nozzle module is driven in a two-dimensional or three-dimensional mode.

Thus, how to use finite resources and structures while carry out two-dimensional printing and three-dimensional printing with the same apparatus to bring forth a mutually beneficial printing performance has become an issue for the artisans in related fields to work on
WO 2016/050321 A1 discloses a 3D printer based on jetting of build material, comprising a build platform and a calibration platform, wherein the calibration platform is adapted to receive a removable print medium (e.g. paper sheet); calibration of the print head positioning is effected in 2D mode by printing on the print medium.

### SUMMARY

The disclosure provides a three-dimensional printing apparatus. As a feeding module is detachably disposed to a frame, a composite nozzle module is able to correspondingly perform two-dimensional printing or three-dimensional printing according to whether the feeding module is disposed or not. Therefore, the applicability of the three-dimensional printing apparatus is expanded.

An embodiment of the disclosure provides a three-dimensional printing apparatus including a frame, a control module, a nozzle module, and a feeding module. The nozzle module is movably disposed in the frame and electrically connected to the control module. The control module drives the nozzle module to move in the frame and define a printing space, and the control module drives the nozzle module to print a three-dimensional object in the printing space. The feeding module is detachably assembled to the frame and electrically connected to the control module. The control module is adapted to drive the feeding module to transfer a medium to the printing space and drives the nozzle module to print a two-dimensional pattern on the medium.

Based on the above, the nozzle module of the three-dimensional printing apparatus has a composite printing capability. With the feeding module being assembled to the frame and electrically connected to the control module, the nozzle module may be driven to print the two-dimensional pattern on the medium after the feeding module is driven to transfer the medium to the printing space. After the feeding module is detached from the frame, the capability of the nozzle module printing the three-dimensional object in the printing space is restored. Accordingly, the three-dimensional printing apparatus is capable of two-dimensional and three-dimensional printing, and the applicability of the three-dimensional printing apparatus is thus expanded.

### BRIEF DESCRIPTION OF THE DRAWINGS

The accompanying drawings are included to provide further understanding, and are incorporated in and constitute a part of this specification. The drawings illustrate exemplary embodiments and, together with the description, serve to explain the principles of the disclosure.
FIG. 1 is a schematic view illustrating a three-dimensional printing apparatus according to an embodiment of the disclosure.
FIG. 2 is a schematic view illustrating the three-dimensional printing apparatus of FIG. 1 in another operation state.
FIG. 3 is a schematic view illustrating electrical connection of components of a three-dimensional printing apparatus of the disclosure.
FIG. 4A is a partial cross-sectional view of a feeding module of FIG. 2.
FIG. 4B is schematic view of the feeding module of FIG. 4A.
FIGs. 5 to 8 are schematic views illustrating operation modes of a three-dimensional printing apparatus.
FIG. 9 is a schematic view illustrating a mode of a three-dimensional printing apparatus according to another embodiment of the disclosure.

### DETAILED DESCRIPTION OF DISCLOSED EMBODIMENTS

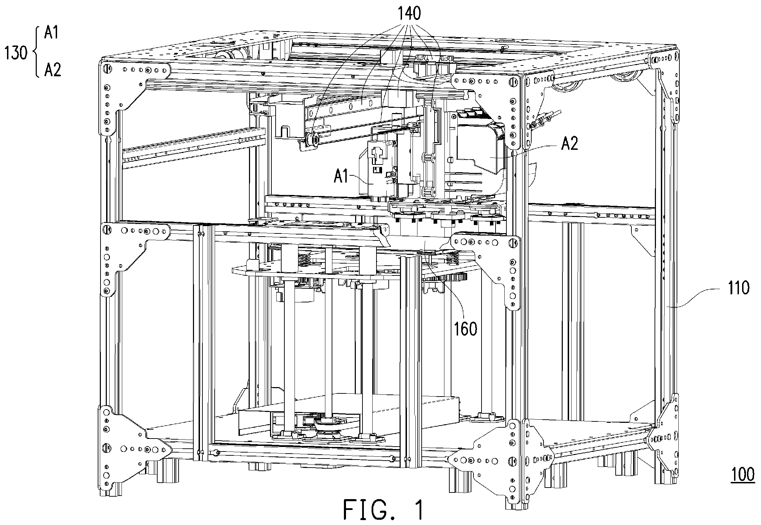

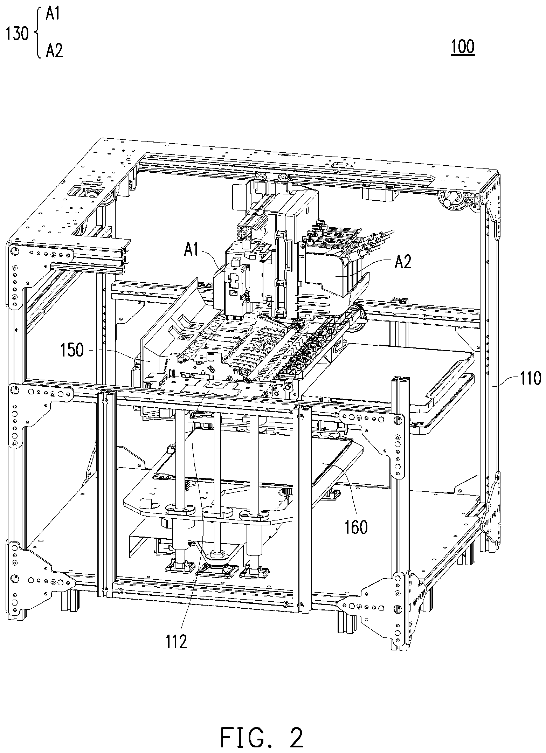

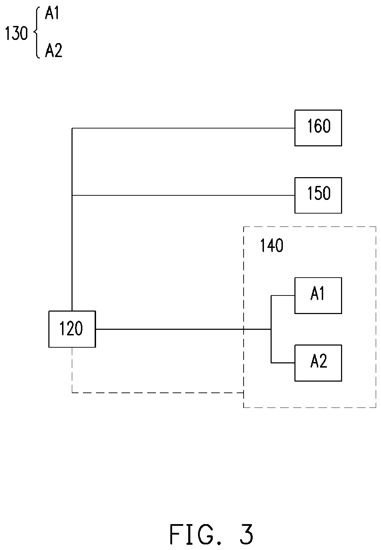

FIG. 1 is a schematic view illustrating a three-dimensional printing apparatus according to an embodiment of the disclosure. FIG. 2 is a schematic view illustrating the three-dimensional printing apparatus of FIG. 1 in another operation state. FIG. 3 is a schematic view illustrating electrical connection of components of a three-dimensional printing apparatus of the disclosure. It should be noted that some irrelevant structures in FIGs. 1 and 2 are omitted for the convenience of illustrating and identifying necessary components and parts. Meanwhile, a Cartesian coordinate system is provided in the figures for the ease of description.

Referring to FIGs. 1 to 3, in the embodiment, a three-dimensional printing apparatus 100 includes a frame 110, a control module 120, a nozzle module 130, a forming stage 160, and a driving module 140. The three-dimensional printing apparatus 100 is a fused deposition modeling (FDM) printing apparatus, for example, where the control module 120 refers to design data of a three-dimensional model, drives the nozzle module 130 to coat a forming material layer by layer on the forming stage 160, and cures the forming material to form a cross-sectional layer. Accordingly, a three-dimensional object is formed through layer-by-layer stacking and construction. The structure of FIG. 1 illustrates a state of use when the three-dimensional printing apparatus 100 generates a three-dimensional object.

In order to expand the applicability of the three-dimensional printing apparatus, the three-dimensional printing apparatus 100 of the embodiment further includes a feeding module 150. The feeding module 150 is disposed in the frame 110 through an assembling frame 112, and operates with the nozzle module 130 for two-dimensional printing. The structure of FIG. 2 illustrates a state of components when the three-dimensional printing apparatus 100 performs two-dimensional printing.

Specifically, the nozzle module 130 of the embodiment is disposed in the frame 110 and movable through the driving module 140. In addition, the nozzle module 130 is electrically connected to the control module 120. Here, the driving module 140 is formed by a plurality of driving components, such as a drive-motor, a gear, a belt, a rail, and the like. With the driving module 140, the nozzle module 130 is movable in the frame 110. Here, the types and configurations of the respective components are not specifically limited. Namely, the embodiment is applicable as long as a component is capable of driving the nozzle module 130 after being electrically connected to the control module 120. As shown in FIG. 1, the nozzle module 130 includes a three-dimensional assembly A1 and an inkjet assembly A2. The three-dimensional assembly A1 and the inkjet assembly A2 are disposed to the same driving component to be moved/driven synchronously. In other words, the nozzle module 130 of the embodiment is a composite nozzle module. The control module 120 may drive the three-dimensional printing assembly A1 to print the three-dimensional object on the forming stage 160 and drive the inkjet assembly A2 to print a two-dimensional pattern. Moreover, in the embodiment, the inkjet assembly A2 may further perform inkjet printing and coloring on the three-dimensional object.

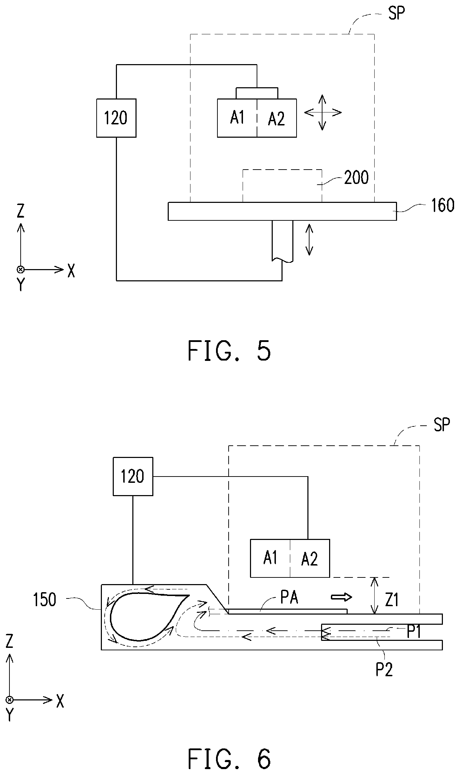

FIG. 5 is a schematic view illustrating a mode of use of the three-dimensional printing apparatus. Here, the illustration is simplified for the ease of description. Referring to FIGs. 1 and 5 at the same time, in the embodiment, the nozzle module 130 is driven by the control module 120 to move in the frame 110 and consequently define a printing space SP. The printing space SP is provided for three-dimensional printing. Therefore, the control module 120 is able to drive the nozzle module 130 to move in the printing space SP and drive the forming stage 160 to move along the Z-axis correspondingly. Consequently, the three-dimensional printing assembly A1 is driven to form a three-dimensional object 200 on the forming stage 160 through stacking layer by layer. Meanwhile, the control module 120 may also drive the inkjet assembly A2 to color the three-dimensional object 200.

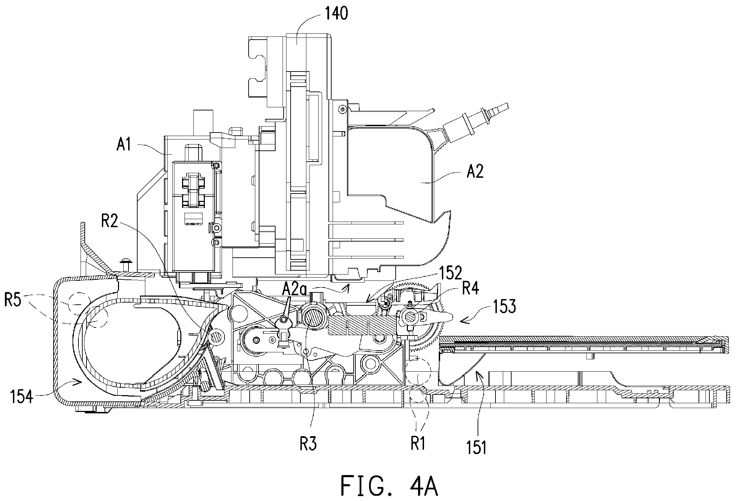

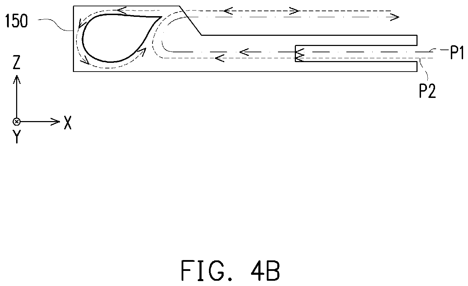

FIG. 4A is a partial cross-sectional view of the feeding module of FIG. 2. FIG. 4B is schematic view of the feeding module of FIG. 4A. FIG. 6 is a schematic view illustrating a mode of use of the three-dimensional printing apparatus corresponding to the states of FIGs. 2 and 4. Referring to FIGs. 2, 4A, 4B, and 6, when two-dimensional printing is performed, the forming stage 160 is moved away from the printing space SP, and the feeding module 150 is assembled to the frame 110 through the assembling frame 112 to electrically connect the feeding module 150 and the control module 120. In the embodiment, the forming stage 160 is driven by the control module 120 to be moved away from printing space SP and to the bottom of an internal space of the frame 110. Accordingly, a space for assembling the feeding module 150 becomes available.

As shown in FIG. 4A, the feeding module 150 includes transfer rollers R1 to R5, a feed-in member 151, a printing member 152, a feedback member 154, and a feed-out member 153. In addition, the transfer roller R1 is disposed to the feed-in member 151, the transfer roller R5 is disposed to the feedback member 154, the transfer roller R4 is disposed to the feed-out member 153, the transfer roller R3 is disposed to the printing member 152, and the transfer roller R2 is disposed between the printing member 152, the feedback member 154, and the feed-in member 151. It should be noted that the embodiment merely describes an example of the configuration of the transfer rollers, and the disclosure is not limited thereto. In other embodiments not shown herein, the number and the configuration of the transfer rollers may be adaptively modified according to the form or the transfer direction of the medium.

In the embodiment, the transfer rollers R1 to R5 are disposed to form a first transfer path PI and a second transfer path P2 in the feeding module 150, as shown in FIG. 4B. On the first transfer path P1, a medium PA sequentially passes through the feeding member 151, the printing member 152, and the feed-out member 153. Accordingly, the medium PA is subjected to printing by the inkjet assembly A2 at the printing member 152 to print the two-dimensional pattern. In addition, the print head A2a of the inkjet assembly A2 is capable of performing inkjet printing on the medium PA at the printing member 152. As shown in FIG. 4A, the print head A2a may be a piezoelectric print head or a thermal print head. Details of the print head A2a may be referred to the conventional inkjet printing technologies, and details in this regard will not be described in the following. Here, the feeding module 150 shown in FIG. 6 is the same as the feeding module 150 shown in FIGs. 2 and 4, but only the profile is illustrated in FIG. 6 for the ease of identification. Besides, in an embodiment not shown herein, the three-dimensional printing apparatus may further include a scan module. The scan module may be detachably disposed to the feed-out member of the feeding module to scan the medium passing through.

It should also be noted that, when the medium PA travels along the second transfer path P2, the medium PA sequentially passes through the feed-in member 151, the printing member 152, the feedback member 154, the printing member 152, and the feed-out member 153. In other words, the medium PA is flipped by means of a turning path design of the feedback member 154. Namely, two opposite sides of the medium may pass through the printing member 152 to perform double-sided printing of a two-dimensional pattern.

It is also noteworthy that the medium PA of the embodiment is a two-dimensional object, such as paper. However, the disclosure is not limited thereto. The embodiment is applicable as long as an object is able to be driven by the feeding module 150 to be transferred to the printing space SP. Accordingly, the inkjet assembly A2 is able to print the two-dimensional pattern on the medium PA.

In addition, in printing shown in FIG. 6, the medium PA is continuously driven by the transfer rollers R1 to R5 to be transferred along the first transfer path PI or the second transfer path P2. In the mode, the inkjet assembly A2 is substantially fixed at a position in the printing space SP sufficient to correspond to the printing member 152 and keeps a predetermined height Z1 with respect to the printing member 152 to perform inkjet printing and coloring. In other words, under the circumstance, the inkjet assembly A2 is controlled by the control module 120 to remain still in the printing space SP, whereas the medium PA is continuously driven by the transfer rollers to pass through the printing member 152. As shown in FIG. 6, the medium PA continuously travels in the positive X-axis direction until the medium PA is moved out of the feeding module 150. Thus, in the embodiment, the medium PA may completely be located in the printing space SP, or only the portion of the medium PA passing through the printing member 152 is located in the printing space SP. Namely, the feeding module 150 only requires the printing member 152 to be located in the printing space SP.

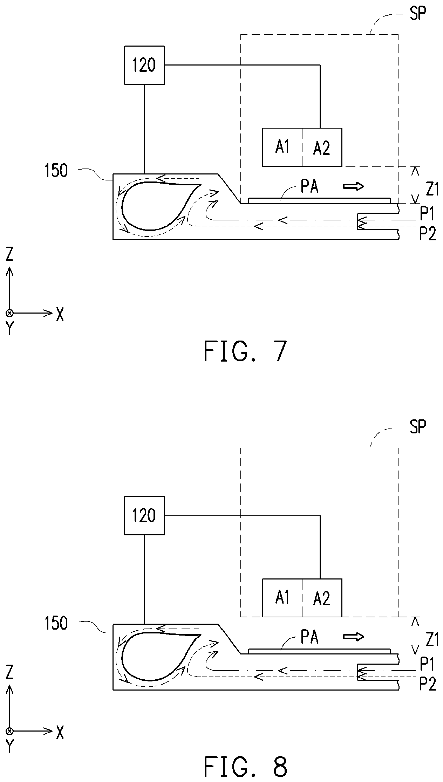

FIG. 7 is a schematic view illustrating the three-dimensional printing apparatus in another mode. Referring to FIG. 7, what differs in the mode is that, whether the medium PA passes through the first transfer path P1 or the second transfer path P2, the medium PA is fixed to a predetermined position after being transferred to the printing space SP. Under the circumstance, the medium PA is completely located in the printing space SP. Therefore, in the mode, the control module 120 drives the inkjet assembly A2 to move and print in the printing space SP, and the inkjet assembly A2 is substantially operated on a plane to perform two-dimensional printing. The plane is parallel to the printing member 152, i.e., parallel to the X-Y plane, and the plane also keeps the predetermined height Z1 relative to the printing member 152. After printing is completed, the medium PA is transferred from the printing member 152 to the feed-out member 153.

FIG. 8 is a schematic view illustrating the three-dimensional printing apparatus in another mode. Referring to FIG. 8, what differs in the embodiment is that, the predetermined height Z1 is kept between the printing space SP and the printing member 152 of the feeding module 150. In other words, the medium PA does not need to enter the printing space SP, but the predetermined height Z1 is an effective inkjet printing distance of the inkjet assembly A2, thereby ensuring that the inkjet assembly A2 is able to print the two-dimensional pattern on the medium PA. In other words, regardless of the previous embodiments or the embodiment, the feeding module 150 is substantially disposed to the bottom of the printing space SP, and may contact or keep the predetermined height Z1 from the printing space SP according to different embodiments.

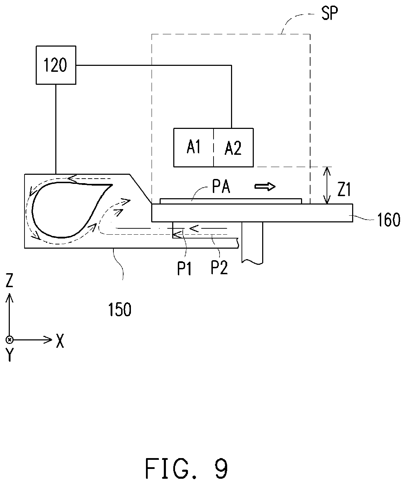

FIG. 9 is a schematic view illustrating a mode of a three-dimensional printing apparatus according to another embodiment of the disclosure. What differs in the embodiment is that the feeding module 150 of the embodiment is assembled beside the forming stage 160, and the feeding module 150 is coplanar with the forming stage 160. In other words, the forming stage 160 is not required to be distant from the printing space SP. Accordingly, the medium PA is transferred to the forming stage 160 through the feeding module 150, and the control module 120 thus directly drives the inkjet assembly A2 to perform two-dimensional printing on the medium PA on the forming stage 160 to print the two-dimensional pattern on the medium PA on the forming stage 160.

In view of the foregoing, in the embodiments of the disclosure, the three-dimensional printing apparatus may correspondingly drive the nozzle module to print a three-dimensional object or a two-dimensional pattern as required according to whether the feeding module is assembled to the frame or not. In a state, the nozzle module is driven by the control module to move in the frame and define the printing space. The three-dimensional printing assembly of the nozzle module may print the three-dimensional object on the forming stage accordingly when the forming stage is moved to the printing space. The control module may also optionally drive the inkjet assembly to perform inkjet printing and coloring on the three-dimensional object during or after printing of the three-dimensional object. In another state, the forming stage is driven to be moved away from the printing space, and the feeding module is assembled to the frame. Accordingly, the medium is driven by the feeding module to be transferred to or through the printing space. Hence, the inkjet assembly is driven to perform two-dimensional printing on the medium to print the two-dimensional pattern on the medium.

In yet another state, the forming stage may remain closely adjacent to the printing space, and the feeding module is assembled beside the forming stage, making the feeding module coplanar with the forming stage. Thus, the medium is driven by the feeding module to be transferred to the forming stage, and the inkjet assembly is driven to perform two-dimensional printing on the medium on the forming stage.

In addition, by arranging the transfer rollers, different transfer paths are formed in the feeding module. Therefore, single-sided as well as double-sided two-dimensional printing may be performed on the medium based on needs, thereby expanding the applicability of the feeding module.

## Claims

1. A three-dimensional printing apparatus (100), comprising:
a frame (110);
a control module (120);
a nozzle module (130), movably disposed in the frame (110) and electrically connected to the control module (120), wherein the control module (120) drives the nozzle module (130) to move in the frame (110) and define a printing space (SP), and the control module (120) drives the nozzle module (130) to print a three-dimensional object (200) in the printing space (SP); and
a feeding module (150), detachably assembled to the frame (110) and electrically connected to the control module (120), wherein the control module (120) is adapted to drive the feeding module (150) to transfer a medium (PA) to the printing space (SP) or transfer the medium (PA) to pass by the printing space (SP) and drive the nozzle module (130) to print a two-dimensional pattern on the medium (PA), wherein the feeding module (150) comprises a feed-in member (151), a printing member (152), a feed-out member (153), a feedback member (154), and a plurality of transfer rollers (R1∼R5) respectively disposed to the feed-in member (151), the feed-out member (153), and the feedback member (154) and forming a first transfer path (P1) where the medium (PA) sequentially passes through the feed-in member (151), the printing member (152), and the feed-out member (153) and a second transfer path (P2) where the medium (PA) sequentially passes through the feed-in member (151), the printing member (152), the feedback member (154), and the feed-out member (153), and the medium (PA) is driven by the transfer rollers (R1∼R5) to be transferred along the first transfer path (P1) or the second transfer path (P2) during printing of the two-dimensional pattern.

2. The three-dimensional printing apparatus as claimed in claim 1, wherein the nozzle module (130) comprises a three-dimensional printing assembly (A1) and an inkjet assembly (A2), the control module (120) drives the three-dimensional printing assembly (A1) to print the three-dimensional object (200), and drives the inkjet assembly (A2) to print the two-dimensional pattern on the medium (PA).

3. The three-dimensional printing apparatus as claimed in claim 2, wherein the control module (120) further drives the inkjet assembly (A2) to perform inkjet printing and coloring on the three-dimensional object (200).

4. The three-dimensional printing apparatus as claimed in claim 2 or 3, further comprising a forming stage (160) disposed in the frame (110) and electrically connected to the control module (120), wherein the forming stage (160) is moved to the printing space (SP) and the control module (120) drives the three-dimensional printing assembly (A1) to print the three-dimensional object (200) on the forming stage (160).

5. The three-dimensional printing apparatus as claimed in claim 4, wherein the forming stage (160) is moved out of the printing space (SP), and the control module (120) drives the inkjet assembly (A2) to print the two-dimensional pattern on the medium (PA).

6. The three-dimensional printing apparatus as claimed in claim 4, wherein the forming stage (160) is moved to the printing space (SP), the feeding module (150) is disposed beside the forming stage (160), the medium (PA) is transferred from the feeding module (150) to the forming stage (160), and the control module (120) drives the inkjet assembly (A2) to print the two-dimensional pattern on the medium (PA).

7. The three-dimensional printing apparatus as claimed in one of the claims 2-6, wherein the inkjet assembly (A2) is fixedly located above the printing member (152) and keeps a predetermined height (Z1) with respect to the printing member (152).

8. The three-dimensional printing apparatus as claimed in one of the claims 2-7, wherein the medium (PA) is fixed to the printing member (152) and subjected to printing by the inkjet assembly (A2).

9. The three-dimensional printing apparatus as claimed in one of the claims 2-8, wherein the medium (PA) continuously passes through the printing member (152) and is subjected to printing by the inkjet assembly (A2).

10. The three-dimensional printing apparatus as claimed in one of the claims 2-9, wherein the control module (120) drives the inkjet assembly (A2) to operate on a plane and print the two-dimensional pattern on the medium (PA), and the plane is parallel to the printing member (152) and keeps a predetermined height (Z1) with respect to the printing member (152).

11. The three-dimensional printing apparatus as claimed in one of the preceding claims, wherein the printing space (SP) keeps a predetermined height (Z1) relative to the printing member (152) during printing of the two-dimensional pattern.

12. The three-dimensional printing apparatus as claimed in one of the preceding claims, wherein the feeding module (150) is disposed at a bottom of the printing space (SP).

13. The three-dimensional printing apparatus as claimed in one of the preceding claims, further comprising a scan module detachably assembled to the feed-out member (153).

## Patentansprüche

1. Vorrichtung zum dreidimensionalen Drucken (100), umfassend:
einen Rahmen (110);
ein Steuerungsmodul (120);
ein Düsenmodul (130), das beweglich in dem Rahmen (110) angeordnet und elektrisch mit dem Steuerungsmodul (120) verbunden ist, wobei das Steuerungsmodul (120) das Düsenmodul (130) antreibt, um sich in dem Rahmen (110) zu bewegen und einen Druckraum (SP) zu definieren, und wobei das Steuerungsmodul (120) das Düsenmodul (130) antreibt, um ein dreidimensionales Objekt (200) in dem Druckraum (SP) zu drucken; und
ein Zuführmodul (150), das abnehmbar an dem Rahmen (110) montiert und elektrisch mit dem Steuerungsmodul (120) verbunden ist, wobei das Steuerungsmodul (120) dazu beschaffen ist, das Zuführmodul (150) anzutreiben, um ein Medium (PA) zum Druckraum (SP) zu befördern oder das Medium (PA) zu befördern, um den Druckraum (SP) zu umlaufen und das Düsenmodul (130) anzutreiben, um ein zweidimensionales Muster auf das Medium (PA) zu drucken, wobei das Zuführmodul (150) ein Einführelement (151), ein Druckelement (152), ein Ausführelement (153), ein Rückkopplungselement (154) und eine Vielzahl von Übertragungswalzen (R1∼R5) umfasst, die jeweils an dem Einführelement (151), dem Austrittselement (153) und dem Rückkopplungselement (154) angeordnet sind und einen ersten Übertragungsweg (P1) ausbilden, auf dem das Medium (PA) nacheinander durch das Eintrittselement (151), das Druckelement (152) und das Austrittselement (153) läuft, und einen zweiten Übertragungsweg (P2), auf dem das Medium (PA) nacheinander durch das Eintrittselement (151), das Druckelement (152), das Rückkopplungselement (154) und das Ausführelement (153) läuft, und wobei das Medium (PA) durch die Übertragungswalzen (R1∼R5) angetrieben wird, um entlang des ersten Übertragungsweges (P1) oder des zweiten Übertragungsweges (P2) während des Druckens des zweidimensionalen Musters befördert zu werden.

2. Vorrichtung zum dreidimensionalen Drucken nach Anspruch 1, wobei das Düsenmodul (130) eine dreidimensionale Druckanordnung (A1) und eine Tintenstrahlanordnung (A2) umfasst, wobei das Steuerungsmodul (120) die dreidimensionale Druckanordnung (A1) zum Drucken des dreidimensionalen Objekts (200) antreibt und die Tintenstrahlanordnung (A2) zum Drucken des zweidimensionalen Musters auf das Medium (PA) antreibt.

3. Vorrichtung zum dreidimensionalen Drucken nach Anspruch 2, wobei das Steuerungsmodul (120) ferner die Tintenstrahlanordnung (A2) antreibt, um Tintenstrahldrucken und Färben auf dem dreidimensionalen Objekt (200) durchzuführen.

4. Vorrichtung zum dreidimensionalen Drucken nach Anspruch 2 oder 3 ferner umfassend eine Formgebungsstufe (160), die in dem Rahmen (110) angeordnet und elektrisch mit dem Steuerungsmodul (120) verbunden ist, wobei die Formgebungsstufe (160) in den Druckraum (SP) bewegt wird und das Steuerungsmodul (120) die dreidimensionale Druckanordnung (A1) antreibt, um das dreidimensionale Objekt (200) auf der Formgebungsstufe (160) zu drucken.

5. Vorrichtung zum dreidimensionalen Drucken nach Anspruch 4, wobei die Formgebungsstufe (160) aus dem Druckraum (SP) herausbewegt wird und das Steuerungsmodul (120) die Tintenstrahlanordnung (A2) antreibt, um das zweidimensionale Muster auf das Medium (PA) zu drucken.

6. Vorrichtung zum dreidimensionalen Drucken nach Anspruch 4, wobei die Formgebungsstufe (160) zum Druckraum (SP) bewegt wird, wobei das Zuführmodul (150) neben der Formgebungsstufe (160) angeordnet ist, wobei das Medium (PA) von dem Zuführmodul (150) zu der Formgebungsstufe (160) befördert wird und das Steuerungsmodul (120) die Tintenstrahlanordnung (A2) antreibt, um das zweidimensionale Muster auf das Medium (PA) zu drucken.

7. Vorrichtung zum dreidimensionalen Drucken nach einem der Ansprüche 2-6, wobei die Tintenstrahlanordnung (A2) fest über dem Druckelement (152) angeordnet ist und eine vorbestimmte Höhe (Z1) in Bezug auf das Druckelement (152) beibehält.

8. Vorrichtung zum dreidimensionalen Drucken nach einem der Ansprüche 2-7, wobei das Medium (PA) an dem Druckelement (152) befestigt ist und einem Druck durch die Tintenstrahlanordnung (A2) unterzogen wird.

9. Vorrichtung zum dreidimensionalen Drucken nach einem der Ansprüche 2-8, wobei das Medium (PA) kontinuierlich durch das Druckelement (152) befördert wird und einem Druck durch die Tintenstrahlanordnung (A2) unterzogen wird.

10. Vorrichtung zum dreidimensionalen Drucken nach einem der Ansprüche 2-9, wobei das Steuerungsmodul (120) die Tintenstrahlanordnung (A2) antreibt, um auf einer Ebene zu arbeiten und das zweidimensionale Muster auf das Medium (PA) zu drucken, und wobei die Ebene parallel zu dem Druckelement (152) ist und eine vorbestimmte Höhe (Z1) in Bezug auf das Druckelement (152) beibehält.

11. Vorrichtung zum dreidimensionalen Drucken nach einem der vorhergehenden Ansprüche, wobei der Druckraum (SP) während des Druckens des zweidimensionalen Musters eine vorbestimmte Höhe (Z1) in Bezug auf das Druckelement (152) beibehält.

12. Vorrichtung zum dreidimensionalen Drucken nach einem der vorhergehenden Ansprüche, wobei das Zuführmodul (150) an einem Boden des Druckraums (SP) angeordnet ist.

13. Vorrichtung zum dreidimensionalen Drucken nach einem der vorhergehenden Ansprüche, die ferner ein Scanmodul umfasst, das abnehmbar an dem Ausführungselement (153) montiert ist.

## Revendications

1. Une imprimante tridimensionnelle (100), comprenant:
un châssis (110);
un module de commande (120);
un module de buse (130), disposé de manière mobile au sein du châssis (110) et connecté électriquement au module de commande (120), dans lequel le module de commande (120) entraîne le module de buse (130) pour se déplacer dans le châssis (110) et pour définir un espace d'impression (SP), et le module de commande (120) pilote le module de buse (130) pour imprimer un objet tridimensionnel (200) au sein de l'espace d'impression (SP); et
un module d'alimentation (150), assemblé de façon amovible au châssis (110) et connecté électriquement au module de commande (120), dans lequel le module de commande (120) est adapté pour entraîner le module d'alimentation (150) pour transférer un support (PA) à l'espace d'impression (SP) ou pour transférer le support (PA) dans le but de passer par l'espace d'impression (SP) et pour piloter le module de buses (130) dans le but d'imprimer un motif bidimensionnel sur le support (PA), dans lequel le module d'alimentation (150) comprend un élément d'alimentation d'entrée (151), un élément d'impression (152), un élément d'alimentation de sortie (153), un élément de rétroaction (154) et une pluralité de rouleaux de transfert (R1∼R5) disposés respectivement pour l'élément d'alimentation d'entrée (151), l'élément d'alimentation de sortie (153) et l'élément de rétroaction (154) et formant un premier chemin de transfert (P1) dans lequel le support (PA) passe séquentiellement à travers l'élément d'alimentation d'entrée (151), l'élément d'impression (152) et l'élément d'alimentation de sortie (153) et un second chemin de transfert (P2) où le support (PA) passe séquentiellement à travers l'élément d'alimentation d'entrée (151), l'élément d'impression (152), l'élément de rétroaction (154) et l'élément d'alimentation de sortie (153), et le support (PA) est entraîné par les rouleaux de transfert (R1∼R5) pour être transféré le long du premier chemin de transfert (P1) ou du second chemin de transfert (P2) pendant l'impression du motif bidimensionnel.

2. L'imprimante tridimensionnelle telle que revendiquée dans la revendication 1, dans lequel le module de buse (130) comprend un ensemble d'impression tridimensionnelle (A1) et un ensemble à jet d'encre (A2), le module de commande (120) pilotant l'ensemble d'impression tridimensionnelle (A1) pour imprimer l'objet tridimensionnel (200) et pilotant l'ensemble à jet d'encre (A2) pour imprimer le motif bidimensionnel sur le support (PA).

3. L'imprimante tridimensionnelle telle que revendiquée dans la revendication 2, dans lequel le module de commande (120) pilote en outre l'ensemble à jet d'encre (A2) pour effectuer une impression et une coloration à jet d'encre sur l'objet tridimensionnel (200).

4. L'imprimante tridimensionnelle telle que revendiquée dans les revendications 2 ou 3, comprenant en outre un étage de formage (160) disposé dans le châssis (110) et connecté électriquement au module de commande (120), dans lequel l'étage de formage (160) est déplacé vers l'espace d'impression (SP) et le module de commande (120) entraînent l'ensemble d'impression tridimensionnelle (A1) pour imprimer l'objet tridimensionnel (200) sur l'étage de formage (160).

5. L'imprimante tridimensionnelle telle que revendiquée dans la revendication 4, dans lequel l'étape de formage (160) est déplacée hors de l'espace d'impression (SP), et le module de commande (120) pilote l'assemblage à jet d'encre (A2) pour imprimer le motif bidimensionnel sur le support (PA).

6. L'imprimante tridimensionnelle telle que revendiquée dans la revendication 4, dans lequel l'étape de formage (160) est déplacée vers l'espace d'impression (SP), le module d'alimentation (150) est disposé à côté de l'étape de formation (160), le support (PA) est transféré du module d'alimentation (150) à l'étage de formage (160), et le module de commande (120) entraîne l'ensemble à jet d'encre (A2) pour imprimer le motif bidimensionnel sur le support (PA).

7. L'imprimante tridimensionnelle telle que revendiquée dans l'une des revendications 2 à 6, dans lequel l'ensemble à jet d'encre (A2) est situé fixement au-dessus de l'élément d'impression (152) et conserve une hauteur prédéterminée (Z1) par rapport à l'élément d'impression (152).

8. L'imprimante tridimensionnelle telle que revendiquée dans l'une quelconque des revendications 2 à 7, dans lequel le support (PA) est fixé à l'élément d'impression (152) et soumis à l'impression par l'ensemble à jet d'encre (A2).

9. L'imprimante tridimensionnelle telle que revendiquée dans l'une quelconque des revendications 2 à 8, dans lequel le support (PA) traverse en continu l'élément d'impression (152) et est soumis à l'impression par l'ensemble à jet d'encre (A2).

10. L'imprimante tridimensionnelle telle que revendiquée dans l'une quelconque des revendications 2 à 9, dans lequel le module de commande (120) pilote l'ensemble à jet d'encre (A2) pour fonctionner sur un plan et imprimer le motif bidimensionnel sur le support (PA), et le plan est parallèle à l'élément d'impression (152) et conserve une hauteur prédéterminée (Z1) par rapport à l'élément d'impression (152).

11. L'imprimante tridimensionnelle telle que revendiquée dans l'une quelconque des revendications précédentes, dans lequel l'espace d'impression (SP) conserve une hauteur prédéterminée (Z1) par rapport à l'élément d'impression (152) pendant l'impression du motif bidimensionnel.

12. L'imprimante tridimensionnelle telle que revendiquée dans l'une quelconque des revendications précédentes, dans lequel le module d'alimentation (150) est disposé au bas de l'espace d'impression (SP).

13. L'imprimante tridimensionnelle telle que revendiquée dans l'une quelconque des revendications précédentes, comprenant en outre un module de numérisation assemblé de manière amovible à l'élément d'alimentation de sortie (153).
